Europäisches Patentamt

European Patent Office

Office européen des brevets

(11) Veröffentlichungsnummer: **0 147 813**
**B1**

(12) **EUROPÄISCHE PATENTSCHRIFT**

(45) Veröffentlichungstag der Patentschrift: **05.09.90**

(21) Anmeldenummer: **84116006.2**

(22) Anmeldetag: **20.12.84**

(51) Int. Cl.⁵: **H 04 N 1/46**

(54) **Verfahren und Schaltungsanordnung zur Simulierung eines Mehrfarbendrucks auf einem Farbmonitor.**

(30) Priorität: **24.12.83 DE 3347049**

(43) Veröffentlichungstag der Anmeldung:
**10.07.85 Patentblatt 85/28**

(45) Bekanntmachung des Hinweises auf die
Patenterteilung:
**05.09.90 Patentblatt 90/36**

(84) Benannte Vertragsstaaten:
**AT BE CH DE FR GB IT LI NL SE**

(56) Entgegenhaltungen:
**EP-A-0 096 090**
**FR-A-2 351 437**
**FR-A-2 512 974**
**US-A-3 128 333**
**US-A-4 037 249**
**US-A-4 075 662**
**US-A-4 349 835**

(73) Patentinhaber: **DR.-ING. RUDOLF HELL GmbH**
**Grenzstrasse 1-5**
**D-2300 Kiel 14 (DE)**

(72) Erfinder: **Jung, Eggert**
**Mühlenberg 25**
**D-2306 Schönberg (DE)**
Erfinder: **Klopsch, Siegfried**
**Steinkamp 2**
**D-2316 Probsteierhagen (DE)**

Courier Press, Leamington Spa, England.

**Beschreibung**

Technisches Gebiet

Die Erfindung bezieht sich auf das Gebiet der elektronischen Reproduktionstechnik für den Mehrfarbendruck und betrifft ein Verfahren zur Simulierung eines Mehrfarbendrucks auf einem Farbmonitor, um eine Farbbeurteilung und Farbkorrektur des zu erwartenden Druckergebnisses vor dem eigentlichen Druckprozeß durchzuführen und eine Schaltungsanordnung, auch Farbsichtgerät genannt.

Zugrundeliegender Stand der Technik

Bei der elektronischen Reproduktion farbiger Vorlagen werden in einem Farbscanner durch punkt- und zeilenweise, trichromatische Vorlagen-Abtastung und optoelektronische Wandlung des Abtastlichtes drei primäre Farbwert-Signale gewonnen, welche ein Maß für die Farbanteile Rot, Grün und Blau der abgetasteten Bildpunkte sind. Ein Farbkorrektur-Rechner korrigiert die Farbmeßwert-Signale und erzeugt im Falle des Vierfarbendruckes vier Farbauszugs-Signale für die Farbauszüge "Gelb", "Magenta", "Cyan" und "Schwarz". Die Farbauszugs-Signale geben die beim Druck erforderlichen Mengen an Gelb-, Magenta-, Cyan- und Schwarz-Druckfarbe an. Von den farbkorrigierten Farbauszugs-Signalen werden die Druckformen für den Druck hergestellt. In Auflagen-Druckmaschinen erfolgt dann der Übereinanderdruck der mit den vier Druckfarben eingefärbten Druckformen auf das Auflagenpapier.

Um das zu erwartende Druckergebnis bereits vor der Druckform-Herstellung kontrollieren und gegebenenfalls noch korrigieren zu können, sind Farbsichtgeräte im Einsatz, bei denen das zu erwartende Druckergebnis durch Nachbildung des Druckprozesses auf einem Farbmonitor simuliert wird. Zur Drucksimulation werden sogenannte Farbumsetzer oder Drucknachbildungsrechner verwendet, welche die Farbauszugs-Signale unter Berücksichtigung der Druckparameter derart in Ansteuersignale für den Farbmonitor umsetzen, daß das Monitor-Farbbild denselben farblichen Eindruck wie der zu erwartende Mehrfarbendruck auf dem Auflagenpapier vermittelt.

Aus der US—A—3,128,333 ist z.B. ein Farbumsetzer bekannt, in dem die Farbauszugs-Signale eine analoge Signalverarbeitung in entsprechende Austeuersignale für den Farbmonitor umgesetzt werden. Der bekannte Farbumsetzer hat aber den Nachteil, daß bei der Darstellung von Mischfarben auf dem Farbmonitor nur eine über den gesamten Farbraum gemittelte Wiedergabequalität eines Mehrfarbendrucks erreicht werden kann.

Zur Qualitätskontrolle eines Mehrfarbendrucks vor der Druckform-Herstellung sind außer den Farbsichtgeräten auch sogenannte Proof-Recorder im Einsatz, bei denen eine Farb-Belichtungseinheit Farbbilder auf einen Farbfilm belichtet, die farbgleich mit dem Mehrfarbendruck sind.

Ein solcher Proof-Recorder ist aus der EP—A—0 096 090 bekannt. Um die farbgleiche Filmbelichtung zu erreichen, enthält der Proof-Recorder ebenfalls einem Farbumsetzer, in dem die Farbauszugswerte des Mehrfarbendrucks in entsprechende Farbdichtewerte zur Ansteuerung der Farb-Belichtungseinheit umgewandelt werden. Die Signalumsetzung in dem Farbumsetzer erfolgt aber ganz anders als in einem Farbsichtgerät.

Offenbarung der Erfindung

Der im Anspruch 1 angegebenen Erfindung liegt daher die Aufgabe zugrunde, ein Verfahren und eine Schaltungsanordnung zur Simulierung eines Mehrfarbendruckes auf einem Farbmonitor anzugeben, mit denen eine weitestgehend farbliche Übereinstimmung zwischen Monitor-Farbbild und späterem Mehrfarbendruck erreicht wird, so daß eine hochwertige und zuverlässige Aussage über die zu erwartende Wiedergabequalität möglich ist.

Kurze Beschreibung der Zeichnungen

Die Erfindung wird im folgenden anhand der Fig. 1 bis 3 näher erläutert.
Es zeigen:
Fig. 1 eine Schaltungsanordnung für ein Farbsichtgerät;
Fig. 2 eine grafische Darstellung eines Druck-Farbraumes und
Fig. 3 eine vorteilhafte Weiterbildung der Schaltungsanordnung.

Bester Weg zur Ausführung der Erfindung

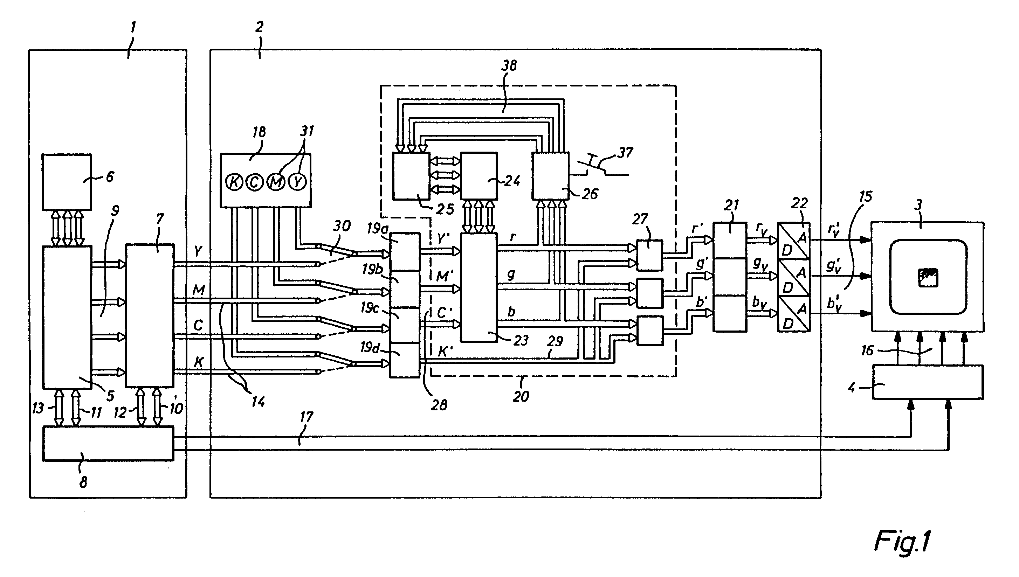

Fig. 1 zeigt ein Ausführungsbeispiel für eine Schaltungsanordnung zur Simulierung eines Mehrfarbendrucks auf einem Farbmonitor für eine Farbbeurteilung und Farbkorrektur des zu erwartenden Mehrfarbendruckes vor dem Druckprozeß, nachfolgend mit Farbsichtgerät bezeichnet.

Das Farbsichtgerät besteht im wesentlichen aus eine Signalquelle 1, einer Umformer-Schaltung 2, einem Farbmonitor 3 und einem Taktgenerator 4.

Die Signalquelle 1 erzeugt digitale Farbauszugswerte Y , M, C und K fü die Farbauszüge "Gelb" (Y), "Magenta" (M), "Cyan" (C) und "Scharz" (K) eines zu druckenden Farbbildes. Die digitalen Farbauszugswerte Y, M, C und K sind ein Maß für die erforderlichen Dosierungsmengen an Druckfarben bzw. für die Rasterpunkt-Großen in Prozent. Die digitalen Farbauszugswerte haben z.B. eine Wortlänge von 8 bit, wobei "Scharz" (Rasterpunkt-Größe 100%) der digitale Farbauszugswert 0 und "Weiß" (Rasterpunkt-

2

EP 0 147 813 B1

Größe 0%) der digitale Farbauszugswert 255 zugeordnet ist und zwischen "Scharz" und "Weiß" 254 Grauwerte unterschiden werden.

Die Signalquelle 1 kann eine elektronische Farbkamera enthalten, welche durch eine fernehmäßige, punkt- und zeilenweise Abtastung des zu druckenden bzw. auf dem Farbmonitor 3 darzustellenden Farbbildes Farbmeßwerte-Signale R, G und B erzeugt.

Eine der Farbkamera nachgeschaltete, einstellbare Farbkorrektur-Stufe rechnet die Farbmeßwert-Signale R, G und B nach den Gesetzmäßigkeiten der subtraktiven Farbmischung in die Farbauszugs-Signale Y, M, C und K um.

Im dargestellten Ausführungsbeispiel besteht die Signalquelle 1 aus einem Ganzbild-Speicher 5, einer Korrektur-Stufe 6, einem Bildwiederhol-Speicher 7 und einem Adreß-Steuerwerk 8. Im Ganzbild-Speicher 5 sind die digitalen Farbauszugswerte Y, M, C und K eines Einzelbildes oder einer bereits montierten Druckseite abgelegt. Die Farbauszugswerte Y, M, C und K eines Einzelbildes wurden, z.B. in einem Farbscanner erzeugt. Die Kombination der Farbauszugswerte von verschiedenen Einzelbildern zu den Farbauszugswerten einer Druckseite nach einem Layout-Plan erfolgte beispielsweise durch eine elektronische Seitenmontage in einer Bildverarbeitungsanlage nach der DE—OS 21 61 038. die zur Darstellung des Farbbildes oder eines Bildausschnitts auf dem Farbmonitor 3 aus beispielsweise 512 × 512 Bildpunkten benötigten Farbauszugswerte werden aus dem gesamten Datenbestand des Ganzbild-Speichers 5 ausgewählt oder berechnet und von dort über die Daten-Base 9 in den Bildwiederhol-Speicher 7 geladen, der eine der Anzahl von Bildpunkten entsprechende Speicherkapazität für 512 × 512 Farbauszugswerte aufweist. Zur Übertragung der Farbauszugswerte ruft das Andreß-Steuerwerk 8 über die Adreß-Busse 10 und 11 die entsprechenden Adressen im Ganzbild-Speicher 5 und im Bildwiederhol-Speicher 7 auf und erzeugt die zugehörigen Lesetakte auf Steuer-Bussen 12 und 13.

Zur Darstellung des Farbbildes auf dem Farbmonitor 3 ruft des Adreß-Steuerwerk 8 über den Adreß-Bus 10 die Adressen des Bildwiderhol-Speichers 7 zyklisch auf. Die adressierten Farbauszugswerte Y, M, C und K werden mit Hilfe des Lesetaktes auf dem Steuer-Bus 12 Zeile für Zeile und innerhalb jeder Zeile Bildpunkt für Bildpunkt ausgelesen und über die Daten-Busse 14 der Umformer-Schaltung 2 zugeführt. In der Umformer-Schaltung 2 werden die Farbauszugswerte Y, M, C und I derart in Video-Ansteuersignale $r'_v$, $g'_v$ und $b'_v$ für den Farbmonitor auf Leitungen 15 umgeformt, daß das auf dem Farbmonitor 3 dargestellte Farbbild denselben farblichen Eindruck vermittelt die das unter Fortdruckbedingungen auf das Auflagenpapier gedruckte Farbbild.

Die punkt- und zeilenweise Aufzeichnung des Farbbildes auf dem Farbmonitor 3 erfolgt beispielsweise nach dem Zeilensprungverfahren mit 50 Halbbildern/sec., um ein flimmerfreies Bild zu erzeugen. Der Taktgenerator 4 erzeugt nach der beim Fernsehen üblichen Technik die horizontalen und vertikalen Ablenksignale sowie die Zeilenstart-Impulse und Bildstart-Impulse auf Leitungen 16. Das Adreß-Steuerwerk 8 in der Signalquelle 1 liefert entsprechende horizontale und vertikale Synchronimpulse über Leitungen 17 an den Taktgenerator 4, so daß die Monitoraufzeichnung mit dem Lesevorgang der Farbauszugswerte aus dem Bild-Wiederholspeicher 7 synchronisiert ist.

Der Bediener kann jetzt das dargeselllte Farbbild beurteilen und gegebenenfalls Farbkorrekturen durch Änderung der Farbauszugswerte Y, M, C und K mit Hilfe der Korrektur-Stufe 6 im Ganzbild-Speicher 5 vornehmen. Die im Ganzbild-Speicher 5 geänderten Farbauszugswerte Y, M, C und K werden automatisch in den Bildwiederhol-Speicher 7 transferiert, so daß auf em Farbmonitor 3 jeweils das farbkorrigierte Bild erscheint.

Jedes von de Signalquelle 1 gelieferte Quadrupel Farbauszugserte Y, M, C und K repräsentiert eine auf dem Auflagenpapier gedruckte Farbe, nachfolgende Druck-Farbe genannt, die durch Übereinanderdruck unterschiedlicher Anteile der Gelb-, Magenta-, Cyan- und Scharz-Farben und durch subtraktive Farbmischung entsteht. Jede Druck-Farbe kann durch ein Tripel von Normfarbwerten $\overline{X}_D$, $\overline{Y}_D$, und $\overline{Z}_D$ gekennzeichnet werden. Die Video-Ansteuerwerte $r'_v$, $g'_v$ und $b'_v$ sind ein Maß für die Leuchtdichten der Einzelphosphore 'Rot", "Grün" und "Blau" des Farbmonitors 3. Jedes Tripel von Video-Ansteuerwerten $r'_v$, $g'_v$ und $b'_v$ repräsentiert daher eine auf dem Farbmonitor 3 durch additive Farbmischung der Komponenten Rot, Grün und Blau gebildete Farbe, nachfolgend Monitor-Farbe genannt. Jede Monitor-Farbe kann ebenfalls durch ein Tripel von Normfarbwerten $\overline{X}_M$, $\overline{X}_M$ und $\overline{Z}_M$ gekennzeichnet werden.

Die Umformer-Stufe 2 besteht aus einem Farb-Geber 18, Gradations-Stufen 19a—19d, einem Farbumsetzer 20, Linearisierungs-Stufen 21 und D/A-Wandlern 22. Der Farbumsetzer 2 wiederum weist eine Interpolations-Stufe 23, einen Stützwert-Speicher 24, eine Rechen-Stufe 25, eine Meß-Stufe 26 sowie Überlagerungs-Stufen 267 auf.

In den Gradations-Sufen 19a—19d werden die Farbauszugswerte Y, M, C und K gemäß Gleichung (1) zunächst nach Druckgradations-Kurven $f_1$ in Farbauszugswerte Y', M', C' und K' korrigiert.

$$Y', M', C' K' = f_1 (Y, M, C, K) \tag{1}$$

Die Druckgradations-Kurven $f_1$, auch Druck-Kennlinien genannt, berücksichtigen die Parameter des Druckverfahrens, das Auflagenpapier sowie die echten Druckfarben. Die Gradations-Stufen 19a—19d sind z.B. als ladbare Speicher (RAM) ausgebildet, in denens die Druckgradations-Kurven $f_1$ abgespeichert sind.

Die korrigierten Farbauszugswerte Y', M', C' und K' werden an den Farbumsetzer 20 gegeben. Im Farbumsetzer 20 wird für jedes Quadrupel von korrigierten Farbauszugswerten (Y', M', C', K') einer Druck-

3

Farbe dasjenige Tripel von Farbwerten (r', g', b') erzeugt, welches für die Darstellung der farbidentischen Monitor-Farbe erforderlich ist.

$$r', g', b' = f_2 (Y', M', C', K') \qquad (2)$$

Im Farbumsetzer 20 werden lediglich die in den Gradations-Stufen 19a—19e korrigierten Farbauszugswerte Y', M' und C' über die Daten-Buse 28 an den Eingang der Interpolations-Stufe 23 gegeben werden, während die in der Gradations-Stufe 19d korrigierten Farbauszugswerte K' für den Schwarzauszug über einen Daten-Bus 29 direkt an die Überlagerungs-Stufen 27 gelangen. Die Interpolations-Stufe 23 gibt zunächst gemäß Gleichung (3) für jedes Tripel von korrigierten Farbauszugswerten Y', M' und C', also ohne Berücksichtigung des Schwarzauszuges, ein zur farbidentischen Darstellen erforderliches, zugeordnetes Tripel von Farbwerten r, g und b aus.

$$r, g, b = f_3 (Y', M', C') \qquad (3)$$

Dabei ist in dem dargestellten Ausführungsbeispiel in vorteilhafter Weise die Zuordnung gemäß Gleichung (3) nur für ein Stützstellen-Netz des Druck-Farbraumes berechnet und in dem Stützwert-Speicher 24 abgelegt worden, während alle für die Farbbild-Aufzeichnung auf dem Farbmonitor (3) erforderlichen Zuordnungen durch laufende Interpolation in der Interpolations-Stufe 23 ermittelt werden. Alternativ können die Zuordnungen auch vor der Farbbild-Aufzeichnung für alle theoretische möglichen Farben des Druck-Farbraumes berechnet werden. In diesem Falle wird die Interpolations-Stufe 23 durch einen entsprechend größeren Zuordnungs-Speicher ersetzt.

Die aus der Interpolations-Stufe 23 ausgegebenen Farbwerte r, g und b werden in den Überlagerungs-Stufen 27 den Farbauszugswerten K' für den Schwarzauszug multiplikativ hinzugefügt, um die korrigierten Farbwerte r', g' und b' am Ausgang des Farbumsetzers 20 zu erhalten.

$$r', g', b' = f_4 (r, g, b) \qquad (4)$$

Die korrigierten Farbwerte r', g' und b' repräsentierten die Monitor-Farben, die auf dem Farbmonitor 3 erzeugt werden sollen, aufgrund der Monitor-Kennlinien, d.h. aufgrund der nichtlinearen Zusammenhänge zwischen den Strahlungsdichten der Einzelphosphore und den Video-Ansteuerwerten nicht erreicht werden. Aus diesem Grunde müssen durch eine sogenannte Monitor-Linearisierung lineare Zusammenhänge zwischen der Strahlungsdichte des Rotphosphors und den Video-Ansteuerwerten r', der Strahlungsdichte des Grünphosphors und den Video-Ansteuerwerten g' sowie der Strahlungsdichte des Blauphosphors und den Video-Ansteuerwerten b' hergestellt werden.

Diese Monitor-Linearisierung erfolgt dadurch, daß die Farbwerte r', g' und b' nach Maßgabe der Monitor-Kennlinien in den Linearisierungs-Stufen 21, in entsprechende Video-Ansteuerwerte $r_v$, $g_v$ und $b_v$ ungerechnet werden. Die Linearisierungs-Stufen 21 sind z.B. als ladbare Speicher (RAM) ausgebildet, in denen die berechneten Video-Ansteuerwerte $r_v$, $g_v$ und $b_v$ digital gespeichert sind. Die gespeicherten digitalen Video-Ansteuerwerte $r_v$, $g_v$ und $b_v$ werden in den D/A-Wandlern 22, welche den Linearisierungs-Stufen 21 nachgeschaltet sind, in die analogen Video-Ansteuerwerte $r'_v$, $g'_v$ und $b'_v$ auf den Leitungen 15 umgewandelt.

Die Monitor-Kennlinien können durch eine Strahlungsdichtemessung am Farbmonitor in Abhängigkeit der Ansteuerwerte ermittelt werden. Es können aber auch die vom Hersteller des Farbmonitors angegebenen Monitor-Kennlinien verwendet werden. Falls die gelieferten Monitor-Kennlinien nicht genau genug sind, ließe sich eine entsprechend größere Anzahl von Kennlinien-Werten durch Interpolation ermitteln.

Es liegt im Rahmen der Erfindung, die Berechnung der korrigierten Farbauszugswerte Y', M', C' und K' in den Gradations-Stufen 19a—19d, die multiplikative Verknüpfung der Farbwerte r, g und b mit den korrigierten Farbauszugswerten K' des Schwarzauszuges und/oder die Linearisierung der Video-Ansteuerwerte $r_v$, $g_v$ und $b_v$ bereits vor der Farbbild-Darstellung auf dem Farbmonitor 3 durchzuführen und die entsprechenden Rechnungen im Datenbestand des Stützwert-Speichers 24 bzw. des Zuordnungs-Speichers zu berücksichtigen.

Nachdem die Wirkungsweise des Farbsichtgerätes erläutert wurde, soll näher auf das Verfahren zur Bestimmung der für eine farbäquivalente Farbbild-Darstellung erforderlichen Farbwerte r, g und b in Abhängigkeit der Farbauszugswerte Y', M' und C' für das Stützstellen-Netz bzw. für den Stützwert-Speicher 24 im Farbumsetzer 20 vor dem eigentlichen Betrieb des Farbsichtgerätes eingegangen werden. In diese Betriebsphase befindet sich ein Umschalter 30 in der dargestellten Position, so daß der Farbgeber 18 mit den Gradations-Stufen 19a—19d verbunden ist.

Dabei wird davon ausgegangen, daß die Gradations-Stufen 19a—19d und der Stützwert-Speicher 24 zunächst linear wirken, indem Gradations-Stufen 19a—19d sowie der Stützwert-Speicher 24 mit linearen Funktionen geladen werden.

In einem ersten Schritt wird eine Eichung des Farbmonitors 3 auf das hellste Weiß (max. Bildweiß) und auf das dunkelste Schwarz (max. Bildtiefe) vorgenommen. Durch die Weiß-Eichung wird sichergestellt, daß der Farbmonitor 3 mit dem hellsten Weiß leuchtet, wenn alle dem Farbumsetzer 20 zugeführten Farbauszugswerte $Y = M = C = K = 255$ (Soll-Weiß; Rasterpunkt-Größe 0%) bzw. Video-Ansteuerwerte

r'$_v$, g'$_v$ und b'$_v$ maximal sind. Zur Weiß-Eichung werden die erforderlichen Farbauszugswerte mit Hilfe der Farbregler 31 "Gelb", "Magenta", "Cyan" und "Schwarz" im Farbgeber 18 eingestellt, das dadurch erzeugte Monitor-Weiß mit einer Mustervorlage "Bildweiß" z.B. mit einem Kunstdruckpapier visuell verglichen und die Betriebsparameter des Farbmonitors 3 solange verändert, bis das Monitor-Weiß dem maximalen Bildweiß entspricht.

Durch ein anschließende Schwarz-Eichung soll erreicht werden, daß der Farbmonitor 3 das dunkelste Schwarz erzeugt, wenn die Farbauszugswerte Y = M = C = K = 0 (Bildschwarz; Rasterpunkt-Größe 100%) bzw. die Video-Ansteuerwerte r'$_v$, g'$_v$ und b'$_v$ minimal sind. Der Schwarz-Abgleich erfolgt sinngemäß mit einer entsprechenden Mustervorlage "Schwarz".

Nach der beschriebenen Eichung werden in einem zweiten Schritt für die Druck-Farben F$_n$ des Stützstellen-Netzes des Druck-Farbraumes diejenigen Farbwert-Tripel r$_n$, g$_n$ und b$_n$ ermittelt, welche zur farbidentischen Wiedergabe der Druck-Farben F$_n$ bzw. des Mehrfarbendrucks auf dem Farbmonitor 3 erforderlich sind. Der zweite Schritt zerfällt in zwei Teilschritte. In dem ersten Teilschritt werden zunächst die erforderlichen Farbwert-Tripel r$_n$, g$_n$ und b$_n$ für die Druck-Eckfarben bzw. für die Eckstützstellen des Druck-Farbraumes ausgemessen. In dem zweiten Teilschritt werden die erforderlichen Farbwert-Tripel r$_n$, g$_n$ und b$_n$ für alle Druck-Zwischenfarben des Stützstellen-Netzes innerhalb des Druck-Farbraumes berechnet.

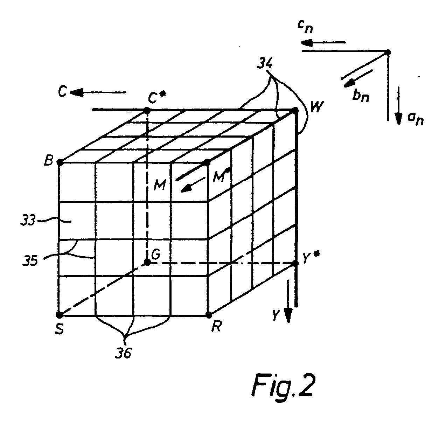

Zur Erläuterung zeigt Figur 2 einen idealisierten, würfelförmigen Druck-Farbraum 33 innerhalb des YMC-Farbkoordinaten-Systems 34 mit den acht Druck-Eckfarben, nämlich mit den Primärfarben Gelb (Y*), Magenta (M*) und Cyan (C*), den Sekundärfarben Rot (Y*, M*), Grün (Y*, C*) und Blau (M*, C*) und mit Schwarz und Weiß. Gleichzeitig ist ein Stützstellen-Netz 35, in welches der Druck-Farbraum 33 unterteilt ist, mit drei Stützstellen 36 auf jeder Würfelkante dargestellt. Selbstverständlich ist die Anzahl der Stützstellen im praktischen Ausführungsbeispiel wesentlich größer. Jede Stützstelle n einer Druckfarbe F$_n$ ist im YMC-Farbkoordinaten-System 34 lagemäßig durch ein Farbauszugswerte-Tripel Y'$_n$, M'$_n$ und C'$_n$ definiert. Jeder Stützstelle n ist nach Gleichung (3) in ein Farbwert-Tripel r$_n$, g$_n$ und b$_n$ zuzuordnen. Die Anzahl der Speicherplätze für die zuzuordnenden Farbwert-Tripel r$_n$, g$_n$ und b$_n$ im Stützwert-Speicher 24 entspricht der Anzahl von Stützstellen n im Druck-Farbraum 33. Die Speicherplätze des Stützert-Speichers 24 sind durch die Adressen 0–a$_m$, 0–b$_m$ und 0–c$_m$ adressierbar. Jedem Speicherplatz in ist eine entsprechende Stützstelle n in der Weise zugeordnet, daß das Adressen-Tripel a$_n$, b$_n$ und c$_n$ mit dem der betreffende Speicherplatz n adressierbar ist, dem Farbauszugswerte-Tripel Y'$_n$, M'$_n$ und C'$_n$ für die zugehörige Stützstelle n entspricht. So ist z.B. der der Druck-Eckfarbe "Weiß" zugeordnete Speicherplatz durch die Adressen 0,0 und 0 und der Druck-Eckfarbe "Schwarz" zugeordnete Speicherplatz durch die Adressen a$_m$, b$_m$ und c$_m$ adressierbar.

In der praktischen Ausführungsform wird kein "räumlicher" Stützwert-Speicher zur Ablage von drei Farbwerten pro Speicherplatz, sondern drei, durch die Adressen a$_n$, b$_n$ und c$_n$ getrennt addressierbare Speicher verwendet, in denen jeweils ein Farbwert der zugeordneten Farbwert-Tripel abgelegt wird.

Zur Durchführung des ersten Teilschrittes werden zunächst acht Farbauszugswert-Tripel gebildet und nacheinander an den Farbmonitor 3 gegeben, um nacheinander acht Monitor-Farben zu erzeugen. Dann werden die Farbauszugswert-Tripel iterativ so verändert, daß die Monitor-Farben farblich an die Druck-Eckfarben angeglichen werden, wobei die acht angeglichenen Monitor-Farben die acht Monitor-Eckfarben darstellen.

In dem Fig. 1 beschriebenen Ausführungsbeispiel werden die Farbauszugswert-Tripel mit Hilfe der Farbregler 31 im Farbgeber 18 erzeugt und verändert und die Farbveränderungen auf dem Farbmonitor 3 visuell überprüft. Zur Angleichung der Monitor-Farben an die Druck-Eckfarben werden die Farbregler 31 für "Gelb", "Magenta" und "Cyan" betätigt, während der Farbregler 31 für "Schwarz" konstant so eingestellt wird, daß der korrigierte Farbauszugswert K' zu Null wird, wodurch während des Angleichungsvorganges keine Signalüberlagerung inden Überlagerungsstufen 27 stattfindet.

Durch Betätigen der Farbregler 31 für die Farben "Gelb", "Magenta" und "Cyan" werden jeweils die Leuchtdichten der zu den "Farben" der Farbregler 31 komplementären Einzelphosphore des Farbmonitors 3 beeinflußt, wie dies aus der nachfolgenden Tabelle hervorgeht.

Zur visuellen Überprüfung der Farbangleichung werden z.B. echte Druck-Eckfarben verwendet, d.h. Farben, die mit realen Druckfarben auf dem Auflagenpapier unter den beim späteren Auflagendruck herrschenden Bedingungen gedruckt wurden. Solche echten Druck-Eckfarben liegen in Form von gedruckten Farbfeldern, auch Farbskala, Farbatlas oder Farbtafel genannt, vor.

Nachfolgend sind die beschriebenen Zusammenhänge in Form einer Tabelle zusammengefaßt:

| Eckfarben | Farbregler | beeinflußte Einzelphosphore |
|---|---|---|
| Gelb | Cyan und Magenta | Rot und Grün |
| Magenta | Cyan und Gelb | Rot und Blau |
| Cyan | Gelb und Magenta | Blau und Grün |
| Rot | Cyan | Rot |
| Grün | Magenta | Grün |
| Blau | Gelb | Blau |
| Weiß | Cyan, Magenta und Gelb | Rot, Grün und Blau |
| Schwarz | Cyan, Magenta und Gelb | Rot, Grün und Blau |

Die Monitor-Eckfarben werden beispielsweise als Farbfelder dargestellt, die flächenmäßig nur einen kleinen Teil der Bildschirmfläche bedecken.

Die zur farbidentischen Darstellung der Monitor-Eckfarben erforderlichen Farbwert-Tripel $r_n$, $g_n$ und $b_n$ werden in der Meß-Stufe 26 gemessen, wobei jeder Meßvorgang zwischen den einzelnen Darstellungen durch Druck einer Taste 37 eingeleitet wird. Die gemessenen Farbwert-Tripel $r_n$, $g_n$ und $b_n$ werden über Daten-Busse 38 und die Rechen-Stufe 25 in den Stützwert-Speicher 24 transferiert und dort unter den Druck-Eckfarben $F_n$ zugeordneten Adressen $a_n$, $b_n$ und $c_n$ abgelegt, wird dies aus nachfolgender Tabelle hervorgeht.

| Eckfarbe | gemessene Farbwert-Tripel der Eckfarben | Adressen des Stütz-wert-Speichers |
|---|---|---|
| Gelb | $r_y$, $g_y$, $b_y$ | $0$, $c_m$, $b_m$ |
| Magenta | $r_m$, $g_m$, $b_m$ | $a_m$, $0$, $c_m$ |
| Cyan | $r_c$, $g_c$, $b_c$ | $0$, $0$, $c_m$ |
| Rot | $r_r$, $g_r$, $b_r$ | $a_m$, $b_m$, $0$ |
| Grün | $r_g$, $g_g$, $b_g$ | $a_m$, $0$, $c_m$ |
| Blau | $r_b$, $g_b$, $b_b$ | $0$, $b_m$, $c_m$ |
| Weiß | $r_w$, $g_w$, $b_w$ | $0$, $0$, $0$ |
| Schwarz | $r_s$, $g_s$, $b_s$ | $a_m$, $b_m$, $c_m$ |

Zum visuellen Vergleich von Monitor-Farben und Dreck-Farben wird vorteilhafterweise ein Lichtkasten in Form eines Lichtschachtes verwendet, der mit einer Öffnung auf den Bildschirm gesetzt wird. Diese Öffnung hat Form und Größe der Bildschirmfläche, so daß der Bildschirm von Außenlicht abgeschirmt wird. Die gegenüberliegende Öffnung des Lichtkastens dient als Einblicköffnung für den Bediener. Der Lichtkasten weist zwischen den Öffnungen und parallel dazu eine Trennwand mit einer Durchblicköffnung auf, durch die der Bediener das auf dem Bildschirm erzeugte Farbfeld betrachtet. Die Vergleichs-Farbfelder werden auf der der Einblick-Öffnung zugewandten Seite der Trennwand im Bereich der Durchblick-Öffnung angebracht. Die Vergleichs-Farbfelder werden in vorteilhafter Wiese von einer Normalichtquelle beleuchtet, deren Helligkeit an die Helligkeit des Bildschirmes angepaßt wird. Dazu beleuchtet die Normlichtquelle wird so eingestellt, daß das vom Kunstdruckpapier reflektierte Licht dieselbe Helligkeit wie der Bildschirm aufweist.

Alternativ zu dem zuvor beschriebenen visuellen Farbvergleich kann auch ein meßtechnischer Vergleich von Farb-Kennzeichnungswerten z.B. von Normfarbwerten, zur Angleichung der Monitor-Eckfarben mit die Druck-Eckfarben vorgenommen werden. In diesem Falle werden zunächst mit Hilfe eines Farbmeßgerätes die Normfarbwerte $\overline{X}_D$, $\overline{Y}_D$ und $\overline{Z}_D$ der Druck-Eckfarben in einer Farbtafel oder dergleichen ausgemessen. Dann werden ebenfalls mit einem Farbmeßgerät die Normfarbewerte $\overline{X}_M$, $\overline{Y}_M$ und $\overline{Z}_M$ der Monitor-Farben auf dem Bildschirm des Farbmonitors 3 ausgemessen und die Farbauszugswert-Tripel mit Hilfe der manuell betätigten Farbregler 31 des Farbgebers 18 verändert, bis die am Farbmeßgerät angezeigten Normfarberte $\overline{X}_M$, $\overline{Y}_M$ und $\overline{Z}_M$ mit den zuvor ermittelten Normfarbwerten $\overline{X}_D$, $\overline{Y}_D$ und $\overline{Z}_D$ der

Druck-Eckfarben übereinstimmen. Die dazu erforderlichen Farbwert-Tripel werden wie beschrieben ausgemessen und gespeichert.

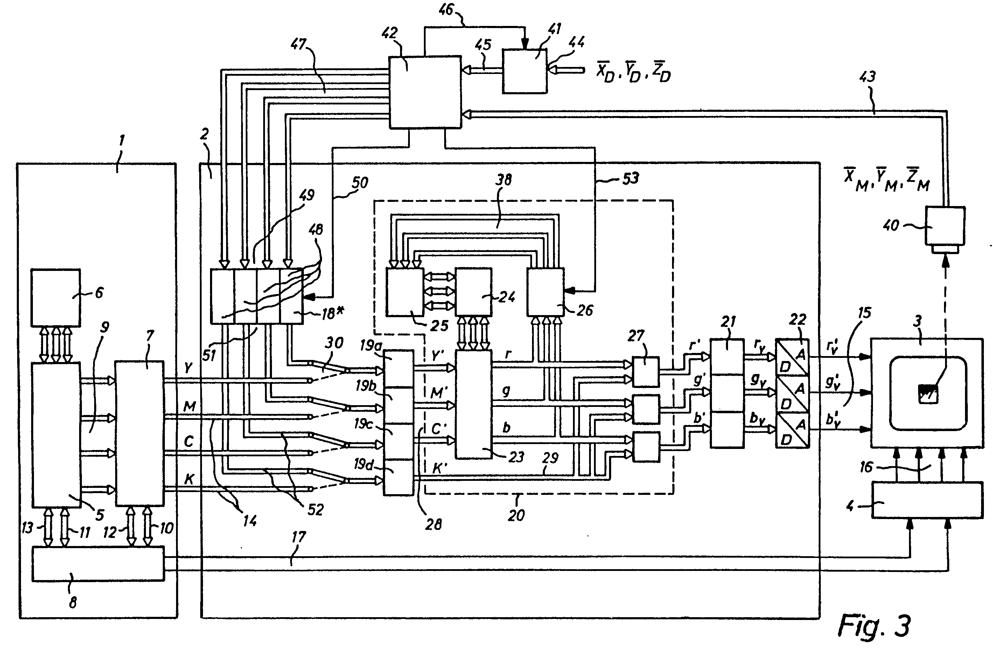

In einer bevorzugten Ausführungsform der Schaltungsanordnung, die in Fig. 3 dargestellt ist, läuft die Angleichung der Monitor-Eckfarben an die Druck-Eckfarben automatisch ab, so daß in vorteilhafter Weise die manuelle Betätigung der Farbregler 31 und der rein visuelle Farbvergleich oder das Ablesen eines Farbmeßerätes entfällt.

Die zur Darstellung der Monitor-Eckfarben benötigten Farbwerte r, g und b ließen sich auch aus den Normanfarbwerten der Druck-Eckfarben $\overline{X}_D$, $\overline{Y}_D$ und $\overline{Z}_D$ und den bekannten Normfarbwerten der Einzelphosphore des Farbmonitors 3 für maximales Bildweiß $(\overline{X}_R, \overline{Y}_R, \overline{Z}_R)$, $(\overline{X}_G, \overline{Y}_G, \overline{Z}_G)$ und $(\overline{X}_B, \overline{Y}_B, \overline{Z}_B)$ nach Gleichungen (5) berechnen, wobei eine erfolgte Monitor-Linearisierung vorausgesetzt wird.

$$\begin{bmatrix} X_D \\ Y_D \\ Z_D \end{bmatrix} = \begin{bmatrix} X_M \\ Y_M \\ Z_M \end{bmatrix} = \begin{bmatrix} r \\ g \\ b \end{bmatrix} \cdot \begin{bmatrix} X_R & X_G & X_B \\ Y_R & Y_G & Y_B \\ Z_R & Z_G & Z_B \end{bmatrix} \qquad (5).$$

Nach dem Meßvorgang erfolgt gemäß dem zweiten Teilschritt die Berechnung der Farbwert-Tripel $r_n$, $g_n$ und $b_n$ für die Zwischenfarben in Abhängigkeit derjenigen Druckart (Tiefdruck, Offsetdruck), die auf dem Farbmonitor simuliert werden soll.

Die Ermittlung der Farbwert-Tripel $r_n$, $g_n$ und $b_n$ für die Zwischenfarben soll am Beispiel für eine Offsetdruck-Simulierung erläutert werden. In diesem Fall werden die Farbwert-Tripel in vorteilhafter Weise durch Lösung der bekannten Neugebauer-Gleichungen gefunden.

Beim autotypischen Dreifarbendruck entstehen durch Nebeneinanderdrucken und teilweises Übereinanderdrucken von Rasterpunkten der Druckfarben Gelb, Magenta und Cyan die acht Eckfarben des Druck-Farbraumes, die durch Normfarbwerte X, Y und Z definiert sind. Durch Nebeneinanderdrucken von Rasterpunkten der Druckfarben entstehen die Primärfarben Gelb $(\overline{X}_y, \overline{Y}_y, \overline{Z}_y)$, Magenta $(\overline{X}_m, \overline{Y}_m, \overline{Z}_m)$ und Cyan $(\overline{X}_c, \overline{Y}_c, \overline{Z}_c)$ durch teilweise Überdecken von Rasterpunkten zweier Druckfarben die Sekundärfarben Rot $(\overline{X}_r, \overline{Y}_r, \overline{Z}_r)$, Grün $(\overline{X}_g, \overline{Y}_g, \overline{Z}_g)$ und Blau $(\overline{X}_b, \overline{Y}_b, \overline{Z}_b)$, durch Übereinanderdrucken von Rasterpunkten aller drei Druckfarben Schwarz $(\overline{X}_s, \overline{Y}_s, \overline{Z}_s)$ und für den Fall, daß keine Rasterpunkte gedruckt werden, Weiß $(\overline{X}_w, \overline{Y}_w, \overline{Z}_w)$.

Nach Neugebauer ergeben sich gemäß Gleichung (6) die Normfarbwerte $\overline{X}$, $\overline{Y}$ und $\overline{Z}$ einer Zwischenfarbe durch Addition der Normfarbwerte der Eckfarben, wobei die Normfarbwerte der Eckfarben entsprechend den wahrscheinlichen oder statistischen Flächenanteilen $\varphi$ der Eckfarben wirksam sind.

$$\begin{bmatrix} \overline{X}_D \\ \overline{Y}_D \\ \overline{Z}_D \end{bmatrix} = \varphi_w \begin{bmatrix} \overline{X}_w \\ \overline{Y}_w \\ \overline{Z}_w \end{bmatrix} + \varphi_y \begin{bmatrix} \overline{X}_y \\ \overline{Y}_y \\ \overline{Z}_y \end{bmatrix} + \varphi_m \begin{bmatrix} \overline{X}_m \\ \overline{Y}_m \\ \overline{Z}_m \end{bmatrix} + \varphi_c \begin{bmatrix} \overline{X}_c \\ \overline{Y}_c \\ \overline{Z}_c \end{bmatrix} + \varphi_r \begin{bmatrix} \overline{X}_r \\ \overline{Y}_r \\ \overline{Y}_r \end{bmatrix} + $$

$$\varphi_g \begin{bmatrix} \overline{X}_g \\ \overline{Y}_g \\ \overline{Z}_g \end{bmatrix} + \varphi_b \begin{bmatrix} \overline{X}_b \\ \overline{Y}_b \\ \overline{Z}_b \end{bmatrix} + \varphi_s \begin{bmatrix} \overline{X}_s \\ \overline{Y}_s \\ \overline{Z}_s \end{bmatrix} \qquad (6)$$

Die wahrscheinlichen Flächenanteil $\varphi$ der acht Eckfarben sind wie folgt abhängig von den jeweiligen Rasterpunkt-Größen (%) bzw. Flächenbedeckungswerten, also abhängig von den Farbauszugswerten X, M und C der resultierenden Farbe:

$$\varphi_w = (1-C)\cdot(1-M)\cdot(1-Y) \qquad \text{(Weiß)}$$

$$\varphi_y = Y\cdot(1-M)\cdot(1-C) \qquad \text{(Gelb)}$$

$$\varphi_m = M\cdot(1-Y)\cdot(1-C) \qquad \text{(Magenta)}$$

$$\varphi_c = C\cdot(1-Y)\cdot(1-M) \qquad \text{(Cyan)}$$

$$\varphi_r = M\cdot Y\cdot(1-C) \qquad \text{(Rot)} \qquad (7)$$

$$\varphi_g = C\cdot Y\cdot(1-M) \qquad \text{(Grün)}$$

$$\varphi_b = C\cdot M\cdot(1-Y) \qquad \text{(Blau)}$$

$$\varphi_s = Y\cdot C\cdot M \qquad \text{(3-Farben Schwarz)}$$

Nach den Gleichungen (6) und (7) kann somit aus den Farbauszugswerten Y, M und C der Druck-Zwischenfarben und den ausgemessenen Normfarbwerten der Druck-Eckfarben die Normfarbwerte $\overline{X}_D$, $\overline{Y}_D$ und $\overline{Z}_D$ de Druck-Zwischenfarben berechnet werden.

Andererseits lassen sich die Normfarbwerte $\overline{X}_M$, $\overline{Y}_M$ und $\overline{Z}_M$ der Monitor-Zwischenfarben durch die Farbwerte r, g und b sowie durch die bekannten Normfarbwerte der Einzelphosphore nach Gleichung (5) bestimmen.

Somit können die für die Farbübereinstimmung zwischen Druck-Zwischenfarben und Monitor-Zwischenfarben ($\overline{X}_D = \overline{X}_M$; $\overline{Y}_D = \overline{Y}_M$, $\overline{Z}_D = \overline{Z}_M$) erforderliche Farbwerte $r_n$, $g_n$ und $b_n$ aus Gleichung (5) in der Rechen-Stufe 25 berechnet und in den Stützwert-Speicher 24 überschrieben werden.

Falls die Normfarbwerte der Druck-Eckfarben nicht vorliegen, ließen sie sich nach Gleichung (5) aus den bekannten Normfarbwerten der Einzelphosphore und den gespeicherten Farbwerten r, g und b für die Monitor-Eckfarben berechnen. Mit den berechneten Normfarbwerten der Druckfarben können dann mit den Gleichungen (6) und (7) die Normfarbwerte der Druck-Zwischenfarben ermittelt werden.

Nach der Füllung des Stützwert-Speichers 24 erfolgt in zweckmäßiger Weise eine Überprüfung der Speicherfüllung, indem mit dem Farbgeber 18 Farbauszugswerte-Tripel Y, M und C von Zwischenfarben des Druck-Farbraumes in den Farbumsetzer 20 eingegeben, in der Interpolations-Stufe 23 mit Hilfe im Stützwert-Speicher 24 abgelegten Stützwerte die zugeordneten Farbwert-Tripel r, g und b berechnet und in Video-Ansteuerwerte $r_v$, $g_v$ und $b_v$ umgesetzt werden. Zur Vereinfachung der Überprüfung sind beispielsweise die Farbauszugswerte-Tripel Y, M und C für verschiedene charakteristische Zwischenfarben des Druck-Farbraumes in dem Farbgeber 18 abrufbar gespeichert.

Stellt sich bei der Kontrolle der Zwischenfarben heraus, daß eine der Zwischenfarben zu ändern ist, wird eine partielle Korrektur der Speicherfüllung mit Hilfe der Rechen-Stufe 25 durchgeführt. Diese partielle Korrektur erfolgt in vorteilhafter Weise nach de EP—PS 0004078. Dazu werden zunächst die Farbwert-Tripel der maximal zu korrigierenden Zwischenfarbe in gewünschtem Sinne geändert und anschließend alle Farbwert-Tripel innerhalb eines räumlichen Korrekturbereiches um die maximal zu korrigierende Zwischenfarbe derart nachkorrigiert, daß ein allmählicher Korrekturverlauf zwischen den geänderten Farbwert-Tripeln der betreffenden Zwischenfarbe und den Farbwert-Tripeln am Rande des Korrekturbereiches erzielt wird.

Fig. 3 zeigt eine bevorzugte Weiterbildung der in Fig. 1 gezeigten Schaltungsanordnung mit einer Einrichtung zur automatischen Angleichung der auf dem Farbmonitor 3 erzeugten Monitor-Farben an die Eckfarben des Druck-Farbraumes, auch Druck-Eckfarben genannt. Diese zusätzliche Einrichtung besteht aus einem Farbmeßgerät 40, einem Sollwert-Speicher 41, einer Regel-Stufe 42 und einem gegenüber der Fig. 1 modifizierten Farb-Geber 18*.

Das Farbmeßgerät 40, z.B. vom Type TMF 1 der Fa. Thoma, ist derart zum Bildschirm des Farbmonitors ausgerichtet, daß es die während des Einstellvorganges nacheinander als Farbfelder auf dem Bildschirm dargestellten acht Monitor-Farben erfaßt und deren Normfarbwert-Tripel $\overline{X}_M$, $\overline{Y}_M$ und $\overline{Z}_M$ als Istwert-Tripel der Monitor-Farben bestimmt. Die Normfarbwert-Tripel $\overline{X}_M$, $\overline{Y}_M$, und $\overline{Z}_M$ der Monitor-Farben werden laufend seriell über einen Daten-Bus 43 an die Regel-Stufe 42 gegeben und dort gespeichert.

Als Sollwert-Tripel für den automatischen Angleich dienen die z.B. in einer Farbtafel ausgemessenen Normfarbwert-Tripel $\overline{X}_D$, $\overline{Y}_D$ und $\overline{Z}_D$ der Druck-Eckfarben oder aus diesen abgeleitete Werte. Die Sollwert-Tripel der acht Druck-Eckfarben werden über einen Daten-Eingang 44 in den Sollwert-Speicher 41 eingeschrieben und werden von der Regel-Stufe 42 über einen Daten-Bus 45 mit Hilf eines Lesetaktes auf einer Leitung 46 nach Bedarf abgerufen.

Die Regel-Stufe 42 erzeugt in Abhängigkeit des Sollwert/Istwert-Vergleiches drei veränderliche Farbsignalwerte für "Gelb", "Magenta" und "Cyan" sowie einen konstanten Farbsignalwert für "Schwarz", der bereits in Fig. 1 erläutert wurde. Durch die Farbsignalwerte für "Gelb", "Magenta" und "Cyan" wird bestimmt, welche Einzelphosphore des Farbmonitors 3 in der Leuchtdichte zu ändern sind sowie der Betrag und die Richtung der Leuchtdichteänderung. Dabei gilt die auf Seite 12 aufgestellte Tabelle sinngemäß.

Die Farbsignalwerte werden über Daten-Busse 47 dem modifizierten Farb-Geber 18* zugeleitet. Der modifizierte Farb-Geber 18* enthält anstelle der Farbregler 31 vier Speicherregister 48, in welche die von der Regel-Stufe 42 kommenden Farbsignalwerte über Daten-Eingänge 49 mit Hilfe eines in der Regel-Stufe erzeugten Schreibtaktes auf einer Leitung 50 eingeschrieben werden. Die Daten-Ausgänge 51 der Speicherregister 48 sind über die Daten-Busse 52 und die Schalter 30 mit den Gradations-Stufen 19a—19d und damit auch mit dem Farbmonitor 3 verbindbar. Die Angleichung einer Monitor-Farbe an eine Druck-Eckfarbe läuft, wie bereits bei der manuellen Einstellung mit Hilfe der Farbregler erläutert, iterativ in aufeinanderfolgenden Zyklen ab, wobei ein Zyklus eine Farbmessung, einen Sollwert/Istwert-Vergleich und die Änderung der Farbsignalwerte aufgrund des Vergleichs umfaßt und der darauffolgende Zyklus wieder mit einer Farbmessung beginnt. Die Zyklen laufen solange ab, bis für eine Monitor-Farbe Übereinstimmung zwischen Sollwert-Tripel und Istwert-Tripel oder eine erlaubte geringfügige Abweichung festgestellt ist. Dann gibt die Regel-Stufe 42 einen Meßbefehl über eine Leitung 53 an die Meß-Stufe 26, welche dann das zur Darstellung der angeglichenen Monitor-Farbe erforderliche Farbwerte-Tripel r, g und b mißt. Danach beginnt der Angleichvorgang für eine neue Monitor-Farbe, wozu die Regel-Stufe 42 das entsprechende neue Sollwert-Tripel aus dem Sollwert-Speicher 41 abruft. Der automatisch ablaufende Vorgang ist beendet, wenn alle acht Monitor-Eckfarben an die Druck-Eckfarben angeglichen sind, was dem Bediener beispielsweise angezeigt werden kann. Selbstverständlich kann der Bediener den Vorgang beliebig unterbrechen oder für eine bestimmte Monitor-Farbe wiederholen.

**Patentansprüche**

1. Verfahren zur farbgleichen Simulierung eines Mehrfarbendrucks auf einem Farbmonitor, bei dem die Farbauszugswerte (Y, M C, K) der Farbauszüge des Mehrfarbendrucks in die für die farbgleiche Simulierung benötigten Farbwert-Tripel (r', g', b') zur Ansteuerung des Farbmonitors umgewandelt werden, indem vor der Simulierung

a) der nichtlineare Zusammenhang zwischen den Farbwert-Tripeln (r', g', b') und den damit erreichten Strahlungsdichten der Einzelphosphore des Farbmonitors linearisiert wird,

b) zur Ermittlung derjenigen Farbwert-Tripel (r, g, b), die zur Erzeugung von mit den Eckfarben des Druckfarbraumes farbgleichen Monitorfarben erforderlich sind, auf dem Farbmonitor Monitorfarben erzeugt und die Monitorfarben durch Änderung der Farbwert-Tripel (r, g, b,) mit Hilfe eines visuellen oder meßtechnischen Vergleichs an die gedruckten Eckfarben des Druckfarbraumes angeglichen werden, wobei diese Eckfarben unter den Druckbedingungen für den Mehrfarbendruck gedruckt wurden,

c) die zur Erzeugung der mit den gedruckten Eckfarben des Druckfarbraumes farbgleichen Monitorfarben erforderlichen Farbwert-Tripel (r, g, b) ausgemessen werden,

d) die zur Erzeugung von mit Zwischenfarben des Druckfarbraumes farbgleichen Monitorfarben benötigten Farbwert-Tripel (r, g, b) aus den zuvor ausgemessenen Farbwert-Tripeln (r, g, b), aus den Farbauszugswerte-Tripeln (Y, M, C) der drei bunten Farbauszüge der Zwischenfarben und aus den Normfarbwerten der gedruckten Eckfarben unter Berücksichtigung des für den späteren Druck vorgesehenen Druckverfahrens berechnet werden,

e) die für die Erzeugung der mit den Eckfarben und Zwischenfarben des Druckfarbraumes farbgleichen Monitorfarben ermittelten Farbwert-Tripel (r, g, b) den jeweiligen Farbauszugswerte-Tripeln (Y, M, C) der drei bunten Farbauszüge der Eckfarben und Zwischenfarben zugeordnet und die Farbwert-Tripel (r, g, b) durch die zugeordneten Farbauszugswerte-Tripel (Y, M, C) abrufbar gespeichert werden,

f) die Farbauszugswerte-Tripel (Y, M, C) der bunten Farbauszüge und die Farbauszugswerte (K) des Schwarzauszuges der Mehrfarbendrucks aufgerufen und nach einer beim späteren Druck verwendeten Druck-Gradationskurve modifiziert wurden,

g) die so modifizierten Farbauszugs-Tripel (Y', M', C') der bunten Farbauszüge des Mehrfarbendrucks die zuvor zugeordneten Farbwert-Tripel (r, g, b) abrufen,

h) die abgerufenen Farbwert-Tripel (r, g, b) mit den modifizierten Farbauszugswerten (K') des Schwarzauszuges des Mehrfarbendrucks verknüpft werden, um korrigierte Farbwert-Tripel (r', g', b') zu erhalten, und indem,

i) die korrigierten Farbwert-Tripel (r', g', b') in die linearisierten Farbwert-Tripel (r'$_v$, g'$_v$, b'$_v$) zur Ansteuerung des Farbmonitors umgewandelt werden.

2. Verfahren nach Anspruch 1, dadurch gekennzeichnet, daß zur farbgleichen Simulierung eines im Offsetdruck gedruckten Mehrfarbendrucks

a) zunächst die Normfarbwerte ($\overline{X}$, $\overline{Y}$, $\overline{Z}$) der Zwischenfarben des Druckfarbraumes nach den Neugebauer-Gleichungen durch Addition von Bruchteilen der Normfarbwerte der acht gedruckten Eckfarben des Druckfarbraumes berechnet werden, wobei die Bruchteile den wahrscheinlichen Flächenanteilen der Eckfarben entsprechend, die von den Rasterpunkt-Größen bzw. den Farbauszugswerte-Tripeln (Y, M, C) der Zwischenfarben abhängen, und

b) die zur farblich übereinstimmenden Erzeugung der Zwischenfarben auf dem Farbmonitor erforderlichen Farbwert-Tripel (r, g, b) nach Patentanspruch 1, Merkmal d, aus den errechneten Normfarbwerten der Zwischenfarben und den gemessenen Farbwert-Tripeln (r, g, b) nach Patentanspruch 1, Merkmal e berechnet werden, welche ein Maß für die Normfarbwerte der Einzelphosphore des Farmonitors sind.

3. Verfahren nach Anspruch 1 oder 2, dadurch gekennzeichnet, daß die Verknüpfung der Farbwert-Tripel (r, g, b) mit den modifizierten Farbauszugswerten (K') des Schwarzauszugs multiplikativ erfolgt.

4. Verfahren nach einem der Ansprüche 1 bis 3, dadurch gekennzeichnet, daß die Zuordnung von Farbauszugswerte-Tripeln (Y, M, C) und Farbwert-Tripeln (r, g, b) vor der Simulierung des Mehrfarbendrucks für alle theoretisch möglichen Farben des Druckfarbraumes vorgenommen wird.

5. Verfahren nach einem der Anspruch 1 bis 3, dadurch gekennzeichnet, daß

a) die Zuordnung von Farbauszugswerte-Tripeln (Y, M, C) und Farbwert-Tripeln (r, g, b) vor der Simulierung des Mehrfarbendrucks nur für ein Stützpunktnetz der theoretisch möglichen Farben des Druckfarbraumes vorgenommen wird, und

b) die zu den aufgerufenen Farbauszugswerten (Y, M, C, K) des Mehrfarbendrucks benötigten Farbwert-Tripel (r, g, b) durch interpolation während der Simulierung des Mehrfarbendrucks gewonnen und ausgegeben werden.

6. Verfahren nach einem der Anspruch 1 bis 5, dadurch gekennzeichnet, daß die Angleichung der Monitorfarben an die Eckfarben des Druckfarbraumes nach Patentanspruch 1, Merkmal b, selbsttätig durchgeführt wird, indem

a) Farbkennzeichungswerte der Eckfarben des Druckfarbraumes oder aus diesen abgeleitete Werte als Sollwerte für die Monitorfarben verwendet werden,

b) die Farbkennzeichnungswerte der erzeugten Monitorfarben laufend am Farbmonitor gemessen und als Istwerte verewendet werden, und

c) aus dem Vergleich von Sollwerten und Istwerten die zum Angleichen der Monitorfarben erforderlichen Farbwert-Tripel (r, g, b) abgeleitet werden.

7. Verfahren nach Anspruch 6 dadurch gekennzeichnet, daß die Farbkennzeichnungswerte die Normalfarbwerte sind.

8. Anordnung zur farbgleichen Simulierung eines Mehrfarbendrucks auf einem Farbmonitor, bestehend aus

a) einer Signalquelle (1) zur Ausgabe der Farbauszugswerte (Y, M, C, K) des Mehrfarbendrucks,

b) dem Farbmonitor (3) und aus

c) einer an die Signalquelle (1) und den Farbmonitor (3) angeschlossenen Umformer-Stufe (2) zur Umwandlung der Farbauszugswerte (Y, M, C, K) des Mehrfarbendrucks in die für die farbgleiche Simulierung benötigten Farbwert-Tripel (r'$_v$, g'$_v$, b'$_v$) zur Ansteuerung des Farbmonitors (3) mit

c$_1$) Gradations-Stufen (19a, 19b, 19c, 19d), welche mit der Signalquelle (1) verbunden sind, zur Änderung der von der Signalquelle (1) ausgegebenen Farbauszugswerte (Y, M, C, K) nach einer vom späteren Druckprozeß abhängigen Druck-Gradationskurve,

c$_2$) einer Interpolations-Stufe (23), welche mit den Gradations-Stufen (19a, 19b, 19c) in Verbindung steht, zur interpolation von Farbwert-Tripeln (r, g, b) aus den Farbwert-Tripeln (r, b, g) eines Stützstellennetzes des Farbraumes in Abhängigkeit von den geänderten Farbauszugswert-Tripeln (Y', M', C'), der drei bunten Farbauszüge des Mehrfarbendrucks,

c$_3$) Verknüpfungs-Stufen (27), welche mit der Interpolations-Stufe (23) und mit der Gradations-Stufe (19d) für die Farbauszugswerte (K) des Schwarzauszuges in Verbindung stehen, zur Bildung von korrigierten Farbwert-Tripeln (r', g', b') aus den Farbwert-Tripeln (r, g, b) und den Farbauszugswerten (K') des Farbauszuges,

c$_4$) Linearisierungs-Stufen (21), die an die Verknüpfungs-Stufen (27) angeschlossen sind, zur Erzeugung linearisierter Farbwert-Tripel (r$_v$, g$_v$, b$_v$) aus den Farbwert-Tripeln (r, g, b) nach den Strahlungsdichte-Kennlinien des Farbmonitors (3) sowie mit

c$_5$) D/A-Wandlern (22), die mit den Linearisierungs-Stufen (21) verbunden sind, zur Erzeugung der Farbwert-Tripel (r'$_v$, g'$_v$, b'$_v$) aus den linearisierten Farbwert-Tripeln (r$_v$, g$_v$, b$_v$) zur Ansteuerung des Farbmonitors (3), dadurch gekennzeichnet, daß die Umformer-Stufe (2) folgende zusätzliche Komponenten aufweist:

d) eine Rechen-Stufe (25) zur Berechnung von Farbwert-Tripeln (r, g, b) für das Stützstellennetz,

e) einen Stützwert-Speicher (24) zur Ablage der berechneten Farbwert-Tripel (r, g, b), welcher an die Rechen-Stufe (25) und die Interpolations-Stufe (23) angeschlossen ist,

f) eine Meßstufe (26) für die Farbwert-Tripel (r, g, b), welche mit den Ausgängen der Interpolations-Stufe (23) und mit der Rechen-Stufe (25) verbunden ist, und

g) einen einstellbaren Farb-Geber (18) zur Gewinnung von Farbauszugswerten (Y, M, C, K) für die Erzeugung von Monitorfarben, der mit den Eingängen der Gradations-Stufen (19a, 19b, 19c, 19d) verbunden ist.

9. Anordnung nach Anspruch 8, dadurch gekennzeichnet, daß die Verknüpfungs-Stufen (27) als Multiplizierer ausgebildet sind.

10. Anordnung nach Anspruch 8 oder 9, dadurch gekennzeichnet, daß zum automatischen Angleichen der auf dem Farbmonitor (3) erzeugten Monitorfarben an die Eckfarben des Druckfarbraumes folgende zusätzliche Baugruppen vorhanden sind:

a) ein dem Farbmonitor (3) zugeordnetes Farbmeßgerät (40) zur Messung der Normfarbwerte der auf dem Farbmonitor erzeugten Monitorfarben als Istwerte,

b) ein Solltwert-Speicher (41) zur Ablage der Normfarbwerte der Eckfarben des Druckfarbraumes als Sollwerte,

c) eine mit dem Farbmeßgerät (40) und dem Sollwert-Speicher (41) verbundene Regel-Stufe (42) zur Erzeugung von Farbwert-Tripeln in Abhängigkeit von dem Vergleich zwischen Sollwerten und Istwerten und

d) einen geänderten Farb-Geber (18*) mit Speicherregistirn für die Farbsignal-Tripel, welche mit der Regel-Stufe (42) verbunden und an die Gradation-Stufen (19a, 19b, 19c, 19d) anschließbar sind.

**Revendications**

1. Procédé pour la simulation, en couleurs identiques, d'une épreuve polychrome sur un moniteur en couleurs, procédé dans lequel les valeurs d'extraits de couleurs (Y, M, C, K) des extraits de couleurs de l'épreuve polychrome sont converties en triplets de valeurs de couleurs (r', g', b') utilisés pour la commande du moniteur en couleurs, en ce qu'avant la simulation:

a) la corrélation non-linéaire entre les triplets de valeurs de coleurs (r', g', b') et les densités de flux de rayonnement, obtenues par leur intermédiaire, des différents phosphores du moniteur en couleurs, est linéarisée.

b) pour déterminer les triplets de valeurs de couleurs (r, g, b), qui sont nécessaires pour obtenir des couleurs du moniteur identiques aux couleurs de référence de l'espace de couleurs d'impression, des couleurs de moniteur sont produites sur le moniteur en couleurs et ces couleurs de moniteur sont assimilées aux couleurs de référence imprimées de l'éspace de couleurs d'impression par modification des triplets de valeurs de couleurs (r, g, b) à l'aide d'une comparaison visuelle ou par une technique de mesure, ces valeurs de référence étant imprimées dans les conditions d'impression de l'épreuve polychrome.

c) les triplets de valeurs de couleurs (r, g, b) nécessaires pour produire les couleurs de moniteur identiques aux couleurs de référence imprimées de l'espace de couleurs d'impression, sont mesurés.

d) les triplets de valeurs de couleurs (r, g, b), nécessaires pour produire des couleurs de moniteur identiques à des couleurs intermédiaires de l'espace de couleurs d'impression, sont calculés à partir des triplets de valeurs de couleurs (r, g, b) préalablement mesurés, à partir des triplets de valeurs d'extraits de couleurs (Y, M, C) des trois extraits des couleurs intermédiaires, et à partir des valeurs de couleurs normales des couleurs de référence imprimées, en tenant compte du procédé d'impression prévu pour l'impression ultérieure,

e) les triplets de valeurs de couleurs (r, g, b), déterminés pour la production des couleurs de moniteur identiques aux couleurs de référence et aux couleurs intermédiaires de l'éspace de couleurs d'impression, sont associés aux triplets de valeurs d'extraits de couleurs (Y, M, C) respectifs des trois extraits de couleurs des couleurs de référence et des couleurs intermédiaires, et les triplets de valeurs de couleurs (r, g, b) sont mémorisés en étant susceptibles d'être appelés par les triplets de valeurs d'extraits de couleurs (Y, M, C) qui leurs sont associés,

f) les triplets de valeurs d'extraits de couleurs (Y, M, C) des extraits de couleurs, et les valeurs d'extraits de couleurs (K) de l'extrait noir de l'épreuve polychrome, sont appelés et sont modifiés d'après une courbe de gradation d'impression utilisée lors de l'impression ultérieur,

g) les triplets d'extraits de couleurs ainsi modifiés (Y', M' C') des extraits de couleurs de l'épreuve polychrome, appellent les triplets de valeurs de couleur (r, g, b) qui leur ont été préalablement associés,

h) les triplets de valeurs de couleurs (r, g, b) ainsi appelés sont combinés avec les valeurs modifiées d'extraits de couleurs (K') de l'extrait noir de l'épreuve polychrome, pour obtenir des triplets de valeurs de couleurs corrigés (r', g', b'), et en ce que,

i) ces triplets de valeurs de couleurs corrigés (r', g', b') sont convertis en triplets de valeurs de couleurs linéarisés (r'$_v$, g'$_v$, b'$_v$) pour la commande du moniteur en couleurs.

2. Procédé selon la revendication 1, caractérisé en ce que, pour la simulation, en couleurs identiques, d'une épreuve polychrome imprimée en impression offset:

a) les valeurs de couleurs normales ($\overline{X}$, $\overline{Y}$, $\overline{Z}$) des couleurs intermédiaires de l'espace de couleurs d'impression sont tout d'abord calculées d'après les égalités Neugebauer par addition de fractions des valeurs de couleurs normales des huit couleurs de référence imprimées de l'espace de couleurs d'impression, ces fractions correspondant aux fractions de surfaces probables des couleurs de référence, qui dépendent des grandeurs de point de trame ou bien des triplets de valeurs d'extraits de couleurs (Y, M, C) des couleurs intermédiaires, et

b) lest triplets de valeurs de couleurs (r, g, b), nécessaires pour la production coïncidente en coloration, des couleurs intermédiaires sur le moniteur en couleurs, selon la revendication 1, caractéristique d, sont calculés à partir des valeurs de couleurs normales calculées des couleurs intermédiaires et des triplets de valeurs de couleurs (r, g, b) mesurés, selon la revendication 1, caractéristique e, et constituent une mesure pour les valeurs de couleurs normales des différents phosphores du moniteur en couleurs.

3. Procédé selon la revendication 1 ou la revendication 2, caractérisé en ce que la combinaison des triplets de valeurs de couleurs (r, g, b) avec les valeurs modifiées d'extraits de couleurs (K') de l'extrait noir s'effectue par multiplication.

4. Procédé selon une des revendications 1 à 3, caractérisé en ce que l'association, avant la simulation de l'épreuve polychrome, des triplets de valeurs d'extraits de couleurs (Y, M, C) et des triplets de valeurs de couleurs (r, g, b), est réalisée pour toutes les couleurs théoriquement possibles de l'espace de couleurs d'impression.

5. Procédé selon une des revendications 1 à 3, caractérisé en ce que:

a) l'association, avant la simulation de l'épreuve polychrome, des triplets de valeurs d'extraits de couleurs (Y, M, C) et des triplets de valeurs de couleurs (r, g, b) n'est réalisée que pour un réseau de points d'appui des couleurs théoriquement possibles de l'espace de couleurs d'impression, et

b) les triplets de valeurs de couleurs (r, g, b), nécessaires pour les valeurs appelées (Y, M, C, K) d'extraits de couleurs l'épreuve polychrome, sont obtenues et sorties par interpolation pendant la simulation de l'épreuve polychrome.

6. Procédé selon une des revendications 1 à 5, caractérisé en ce que l'assimilation des couleurs du moniteur aux couleurs de référence de l'espace de couleurs d'impression, selon la revendication 1, caractéristique b, est effectuée automatiquement en ce que:

a) des valeurs de caractérisation des couleurs de référence de l'espace de couleurs d'impression, ou bien des valeurs dérivées de ces valeurs de caractérisation, sont utilisées en tant que valeurs de consigne pour les couleurs du moniteur,

b) les valeurs de caractérisation des couleurs du moniteur ainsi obtenues sont mesurées en continu sur le moniteur en couleurs et utilisées en tant que valeurs réelles, et

c) les triplets de valeurs de couleurs (r, g, b), nécessaires pour l'assimilation des couleurs du moniteur aux couleurs de référence, sont dérivés de la comparaison entre les valeurs de consigne et les valeurs réelles.

7. Procédé selon la revendication 6, caractérisé en ce que les valeurs de caractérisation de couleurs sont les valeurs de couleurs normales.

8. Dispositif pour la simulation, en couleurs identiques, d'une épreuve polychrome sur un moniteur en couleurs, dispositif constitué par:

a) une source de signaux (1) pour délivrer les valeurs d'extraits de couleurs (Y, M, C, K) de l'épreuve polychrome.

b) le moniteur en couleurs (3), et

c) un étage convertisseur (2) raccordé à la source de signaux (1) et au moniteur en couleurs (3), pour convertir les valeurs d'extraits de couleurs (Y, M, C, K) de l'épreuve polychrome en triplets de valeurs de couleurs (r'$_v$, g'$_v$, b'$_v$) nécessaires pour la simulation, en couleurs identiques, en vue de commander le moniteur en couleurs (3), cet étage de convertisseur comportant:

c$_1$) des étages de gradation (19a, 19b, 19c, 19d), qui sont reliés à la source de signaux (1), pour modifier les valeurs d'extraits de couleurs (Y, M, C, K) délivrées par la source de signaux (1), selon une courbe de gradation d'impression dépendant d'un processus d'impression ultérieur,

c$_2$) un étage d'interpolation (23), qui est relié aux étages de gradation (19a, 19b, 19c, 19d), pour l'interpolation de triplets de valeurs de couleurs (r, g, b) provenant des triplets de valeurs de couleurs (r, g, b) d'un réseau de points d'appui de l'espace de couleurs, en fonction des triplets de valeurs d'extraits de couleurs modifiés (Y', M', C'), des trois extraits de couleurs de l'épreuve polychrome,

c$_3$) des étages de combinaison (27), qui sont reliés à l'étage d'interpolation (23) et à l'étage de gradation (19d) pour les valeurs d'extraits de couleurs (K) de l'extrait noir, pour la formation de triplets de valeurs de couleurs corrigés (r', g', b') provenant des triplets de valeurs de couleurs (r, g, b) et la formation des valeurs d'extraits de couleurs (K') de l'extrait noir,

c$_4$) des étages de linéarisation (21), qui sont reliés aux étages de combinaison (27), pour obtenir des triplets de valeurs de couleurs linéarisés (r$_v$, g$_v$, b$_v$), à partir des triplets de valeurs de couleurs (r, g, b), selon les courbes caractéristiques de densité du flux de rayonnement du moniteur en couleurs (3), ainsi que

c$_5$) des convertisseurs numériques/analogiques (22), qui sont reliés aux étages de linéarisation (21) pour obtenir les triplets de valeurs de couleurs (r'$_v$, g'$_v$, b'$_v$) à partir des triplets de valeurs de couleurs linéarisés (r$_v$, g$_v$, b$_v$) pour commander le moniteur en couleurs (3), dispositif caractérisé en ce que l'étage convertisseur (2) comporte les composants complémentaires suivants:

d) en étage de calcul (25), pour calculer des triplets de valeurs de couleurs (r, g, b) pour le réseau de points d'appui,

e) une mémoire de valeurs d'appui (24) pour le dépôt des triplets de valeurs de couleurs (r, g, b) ainsi calculés, et qui est relié à l'étage de calcul (25) et à l'étage d'interpolation (23),

f) un étage de mesure (26) pour lest triplets de valeurs de couleurs (r, g, b), et qui est relié aux sorties de l'étage d'interpolation (23) et àl'étage de calcul (25), et

g) un émetteur réglable de couleurs (18) pour obtenir des valeurs d'extraits de couleurs (Y, M, C, K) pour la production de couleurs du moniteur, et qui est relié aux entrées des étages de gradation (19a, 19b, 19c, 19d).

9. Dispositif selon la revendication 8, caractérisé en ce que les étages de combinaison (27) sont réalisés sous la forme de multiplicateurs.

10. Dispositif selon la revendication 8 ou la revendication 9, caractérisé en ce que, pour l'assimilation automatique aux couleurs de référence de l'espace de couleurs d'impression, des couleurs de moniteur obtenues sur le moniteur en couleurs (3), les groupes constitutifs complémentaires suivants sont prévus:

a) un appareil (40) de mesure des couleurs, associé au moniteur en couleurs (3), pour mesurer les valeurs de couleurs normales des couleurs de moniteur obtenues sur le moniteur en couleurs en tant que couleurs réelles,

b) une mémoire de valeurs de consigne (41) pour le dépôt des valeurs de couleurs normales des couleurs de référence de l'espace de couleurs d'impression en tant que valeurs de consigne,

c) un étage de réglage (42), relié à l'appareil (40) de mesure des couleurs et à la mémoire de valeurs de consigne (41), pour produire des triplets de valeurs de couleurs en fonction de la comparaison entre les valeurs de consigne et les valeurs réelles, et

d) un émetteur couleurs modifié (18*) avec des registres de mémoire pour les triplets de signaux de couleurs, qui sont reliés à l'étage de réglage (42) et sont susceptibles d'être raccordés aux étages de gradation (19a, 19b, 19c, 19d).

**Claims**

1. Method for the chromatically identical simulation of multicolour printing on a colour monitor, in which the colour separation values (Y, M, C, K) of the colour separations of the multicolour printing are converted into the required colour value triples (r', g', b') for the chromatically identical simulation, to control the colour monitor, wherein prior to the simulation

a) the non-linear correlation between the colour value triples (r', g', b') and the radiation densities achieved thereby of the individual phosphors of the colour monitor is linearised,

b) to determine the colour value triples (r, g, b) necessary for the production of monitor colours which are chromatically identical to the angle colours of the printing colour space, monitor colours are produced on the colour monitor and the monitor colours are adapted to the printed angle colours of the printing colour space through altering the colour value triples (r, g, b) by means of a visual or technical measurement comparison, wherein these angle colours were printed under the printing conditions for multicolour printing,

c) the colour value triples (r, g, b) necessary for the production of the monitor colours chromatically identical to the printed angle colours of the printing colour space are measured,

d) the colour value triples (r, g, b) required for the production of monitor colours chromatically identical to intermediate colurs of the colour printing spare are calculated from the previously measured colour value triples (r, g, b), from the colour separation value triples (Y, M, C) of the three coloured colour separations of the intermediate colours and from the standard colour values of the printed angle colours, taking into account the printing process provided for the subsequent printing,

e) the colour value triples (r, g, b) determined for the production of the monitor colours chromatically identical to the angle colours and intermediate colours of the printing colour space are associated with the respective colour separation value triples (Y, M, C) of the three coloured colour separations of the angle colours and intermediate colours and the colour value triples (r, g, b) are stored so as to be able to be recalled by the associated colour separation value triples (Y, M, C).

f) the colour separation value triples (Y, M, C) of the coloured colour separations and the colour separation values (K) of the black separation of the multicolour printing are called up and modified according to a print gradation curve which is used in the subsequent printing,

g) the colour separation triples (Y', M', C'), thus modified, of the coloured colour separations of the multicolour printing recall the previously associated colour value triples (r, g, b),

h) the recalled colour value triples (r, g, b) are combined with the modified colour separation values (K') of the black separation of the multicolour printing, in order to obtain adapted colour value triples (r', g', b'), and wherein

i) the adapted colour value triples (r', g', b') are converted into the linearised colur value triples (r'$_v$, g'$_v$, b'$_v$) to control the colour monitor.

2. Method according to Claim 1, characterized in that for the chromatically identical simulation of multicolour printing printed in offset printing

a) firstly the standard colour values ($\overline{X}$, $\overline{Y}$, $\overline{Z}$) of the intermediate colours of the printing colur space are calculated according to the Neugebauer equations through addition of fractions of the standard colour values of the eight printed angle colours of the printing colour space, wherein the fractions correspond to the probable area portions of the angle colours, which depend on the raster point sizes or respectively the colour separation value triples (Y, M, C) of the intermediate colours, and

b) the colour value triples (r, g, b) necessary for the production of intermediate colours on the colour monitor which coincide chromatically, in accordance with Claim 1, feature d, are calculated from the computed standard colour values of the intermediate colours and the measured colour value triples (r, g, b) in accordance with Claim 1, feature e, which are a measurement for the standard colour values of the individual phosphors of the colour monitor.

3. Method according to Claim 1 or 2, characterized in that the combining of the colour value triples (r, g, b) with the modified colour separation values (K') of the black separation takes place multiplicatively.

4. Method according to Claims 1 to 3, characterized in that the association of colour separation value triples (Y, M, C) and color value triples (r, g, b) prior to the simulation of the multicolour printing is carried out for all theoretically possible colours of the printing colour space.

5. Method according to one of claims 1 to 3, characterized in that

a) the association of colour separation value triples (Y, M, C) and colour value triples (r, g, b) prior to the simulation of the multicolur printing is only carried out for a network of support points of the theoretically possible colours of the printing colur space, and

b) the colour value triples (r, g, b) required for the colour separation values (Y, M, C, K) of the multicolour printing which are called up, are obtained and issued by interpolation during the simulation of the multicolour printing.

6. Method according to one of claims 1 to 5, characterized in that the adapting of the monitor colours to the angle colours of the printing colour space according to Claim 1, feature b is carried out automatically, wherein

a) colour characterizing values of the angle colours of the printing colour space or values derived therefrom are used as nominal values for the monitor colours,

b) the colour characterizing values of the produced monitor colours are measured continuously on the colour monitor and are used as actual values, and

c) from the comparison of nominal values and actual values, the colour value triples (r, g, b) are derived, which are necessary for the adapting of the monitor colours.

7. Method according to Claim 6, characterized in that the colour characterizing values are the standard colour values.

8. Arrangements for the chromatically identical simulation of multicolour printing on a colour monitor, consisting of

a) as signal source (1) for the emission of the colour separation values (Y, M, C, K) of the multicolour printing,

b) the colour monitor (3) and of

c) a converter stage (2), connected to the signal source (1) and the colour monitor (3) for the conversion of the colour separation values (Y, M, C, K) of the multicolour printing into the colour value triples $(r'_v, g'_v, b'_v)$ necessary for the chromatically identical simulation, to control the colour monitor (3) with

$c_1$) gradation stages (19a, 19b, 19c, 19d), which are connected with the signal source (1), to alter the colour separation values (Y, M, C, K) emitted by the signal source (1) according to a print gradation curve dependent on the subsequent printing process,

$c_2$) an interpolation stage (23), which communicates with the gradation stages (19a, 19b, 19c), for the interpolation of colour value triples (r, g, b) from the colour value triples (r, b, g) of a network of support points of the colour space as a function of the altered colour separation value triples (Y', M', C') of the three coloured colour separations of the multicolour printing,

$c_3$) combining stages (27), which communicate with the interpolation stage (23) and with the gradation stage (19d) for the colour separation values (K) of the black separation, for the formation of corrected colour value triples (r', g', b') from the colour value triples (r, g, b) and the colour separation values (K') of the colour separation,

$c_4$) linearising stages (21), which are connected to the combining stages (27), for the production of linearised colour value triples $(r_v, g_v, b_v)$ from the colour value triples (r, g, b) according to the radation density characteristics of the colour monitor (3) and also with

$c_5$) D/A converters (22), which are connected with the linearising stages (21), for the production of the colour value triples $(r'_v, g'_v, b'_v)$ from the linearised colour value triples $(r_v, g_v, b_v)$ to control the colour monitor (3), characterized in that the converter stage (2) has the following additional components:

d) a calculation stage (25) for the calculation of colour value triples (r, g, b) for the support site network,

e) a support value for memory (24) for the storage of the calculated colour value triples (r, g, b), which is connected to the calculation stage (25) and the interpolation stage (23),

f) a measurement stage (26) for the colour value triples (r, g, b), which is connected with the outputs of the interpolation stage (23) and with the calculation stage (25), and

g) an adjustable colour emitter (18) for the obtaining of colour separation values (Y, M, C, K) for the production of monitor colours, which is connected with the inputs of the gradation stages (19a, 19b, 19c, 19d).

9. Arrangement according to Claim 8, characterized in that the combining stages (27) are constructed as multipliers.

10. Arrangement according to Claim 8 or 9, characterized in that for the automatic adaptation of the monitor colours produced on the colour monitor (3) to the angle colours of the printing colour space, the following additional subassemblies are present:

a) a colour measurement apparatus (40), associated with the colour monitor (3) for the measurement of the standard colour values of the monitor colours produced on the colour monitor as actual values,

b) a nominal value memory (41) for the storage of the standard colour values of the angle colours of the printing colour space as nominal values,

c) a regulating stage (42), connected with the colour measurement apparatus (40) and the nominal value memory (41), for the production of colour value triples as a function of the comparison between nominal values and actual values and

d) an altered colour emitter (18*) with memory registers for the colour signal triples, which are connected with the regulating stage (42) and are able to be connected to the gradation stages (19a, 19b, 19c, 19d).

14

Fig.1

Fig.2

Fig. 3

EP 0 147 813 B1